# EUROPÄISCHE PATENTSCHRIFT

(11) **EP 0 983 784 B1**
(45) Veröffentlichungstag und Bekanntmachung des Hinweises auf die Patenterteilung: **25.02.2004**
(21) Anmeldenummer: 99114575.6
(22) Anmeldetag: 24.07.1999
(51) Int. Cl.: B01D 46/52

(54) **Filter, insbesondere für den Einsatz im Zuluftbereich von Innenräumen**
Filter, particularly for the use in the area of supply air to interiors
Filtre, en particulier utilisable pour la traitement de l'air amené dans les espaces intérieurs

(30) Priorität: 03.09.1998 DE 19840146; 03.09.1998 DE 29815861 U
(43) Veröffentlichungstag der Anmeldung: 08.03.2000
(73) Patentinhaber: Mann + Hummel GmbH, 71638 Ludwigsburg (DE)
(72) Erfinder: Grad, Maximilian, 84163 Marklkofen (DE); Luka, Helmut, 71672 Marbach (DE); Rapp, Siegfried, 71711 Murr (DE); Weiss, Stefan, Dr., 40235 Düsseldorf (DE)
(74) Vertreter: Voth, Gerhard, Dipl.-Ing.

(56) Entgegenhaltungen:
- WO-A-93/12858
- DE-A- 4 343 814
- US-A- 5 273 563

## Beschreibung

Die Erfindung betrifft einen Filtereinsatz nach der Gattung des Patentanspruches 1. Außerdem betrifft die Erfindung einen Filter, insbesondere Luftfilter für den Einsatz in Kfz-Klimaanlagen.

Filtereinsätze mit rechteckigen Filterrahmen sind bekannt. Die gefalteten Filtereinsätze benötigen in der Regel eine Dichtung, so daß der Spalt zwischen Gehäuse und Filterrahmen des Filtereinsatzes gegen Luftdurchströmung verschlossen wird. Auf dem rechteckigen Filterrahmen oder direkt auf der gefalteten Filterbahn wird daher eine Dichtung aufgebracht. Die durch die Stirnseite der gefalteten Filterbahn gebildete Seitenkante des Filters bietet eine genügende Steifigkeit, um in Verbindung mit der Filteraufnahme im Filtergehäuse eine Dichtwirkung zu erzielen. Die durch die letzten Filterfaltungen gebildeten Endkanten des Filtereinsatzes sind jedoch nicht stabil genug, um eine genügende Anpressung der Dichtung in der Aufnahme des Filtergehäuses zu erzielen.

Bei mehrlagigen Filtermaterialien, die mit Schichten aus Aktivkohle oder sonstigen körnigen Strukturen belegt sind, tritt zusätzlich das Problem auf, das die Endfalte produktionsbedingt eine offene Schnittkante aufweist. Aus dieser kann die Aktivkohle oder andere Partikel austreten. Solche Partikel sind jedoch auf der Reinseite des Filters nicht erwünscht.

Die EP-A-759 319 enthält eine Lehre, wonach die Endfalten des Filtereinsatzes in ein U-förmiges Profil eingesteckt werden können. Zu diesem Zweck weist der U-Schlitz ein Untermaß auf, so daß die Endkante unter Preßdruck eingesteckt werden muß, oder die Endfalte wird in einem Schlitz mit Übermaß verklebt. Das U-Profil besitzt eine ausreichende Steifigkeit, so daß die Dichtung auf der Außenseite dieses Profils angebracht werden kann. Problematisch ist ein solcher Kantenabschluß allerdings bei Filtermedien, die mehrere Lagen, insbesondere auch spröde Lagen, aufweisen. Dies ist z. B. bei der Verwendung von Filtermedien mit Aktivkohleschichten der Fall. Ein Einstecken unter Preßdruck würde zu einer Zerstörung des Filtermediums an den Rändern führen. Bei einem Übermaß des Spaltes ist auf jeden Fall eine Klebeverbindung notwendig, um eine genügende Dichtheit zu erreichen. Diese läßt den Aufwand bei der Fertigung der Filtereinsätze steigen, da die Trocknungszeiten des Klebers beachtet werden müssen. Im übrigen muß auch bei Verklebung des Filtermediums mit dem U-Profil die Fügerichtung des U-förmigen Schlitzes beachtet werden. Es ist in jedem Fall eine präzise Relativbewegung zwischen U-Profil und dem schwer handzuhabenden Filtermedium notwendig, damit die Endkante des Filtermediums den Schlitz genau trifft. Wird der Schlitz im U-Profil derart gewählt, daß zwischen Falten und Schlitzen Spiel besteht und wird gleichzeitig auf eine Verklebung des Filtermediums mit dem U-Profil verzichtet, so ergibt sich eine Dichtung zwischen diesen beiden Bauteilen lediglich durch die labyrinthartige Gestalt des Spaltes. Diese Bauform läßt sich nur bei einem sehr geringen Druckverlust zwischen Rein- und Rohseite realisieren. Anderenfalls entsteht am Filterelement ein Leckagetuftstrom, der nicht gefiltert wird.

Um die genannten Nachteile zu vermeiden, könnte man entsprechend der in der WO-A-93/12858 vorgehen. Danach wird ein einteiliger Filterrahmen vorgesehen, in den das Filtermedium eingelegt wird. An den Endkanten des Filterrahmens befinden sich Aufnahmen für die letzte Filterfalte, die klappbar ausgeführt sind. Ein Einführen der letzten Filterfalte in diese Aufnahmen wird deswegen erleichtert. Durch einen Schnappmechanismus wird die eingeschobene Filterfalte in der Aufnahme fixiert. Diese Lösung hat jedoch den Nachteil, daß sie das herzustellende Filterelement verteuern. Dies liegt hauptsächlich daran, daß das Filtermedium in einen vorgefertigten Rahmen eingesetzt wird. Die zick-zack-förmigen Seitenkanten des Filtermediums müssen daher eine zusätzliche Abdichtung erfahren, da aufgrund der Fügerichtung des Filtermediums in den vorgefertigten Filterrahmen eine direkte Abdichtung zwischen Rahmen und Filtermedium schwer realisierbar ist. Außerdem läßt der vorgefertigte Rahmen nur die Montage eines gefalteten Filtermediums einer bestimmten Größe zu. Will man also Filterelemente verschiedener Größe realisieren, so ist für jede Größe die Herstellung eines gesonderten Filterrahmens notwendig.

Die Aufnahmen für die Endfalten gemäß der WO-A-93/12858 sind derart gestattet, daß die Schnappverbindung zur Fixierung nicht direkt mit der Aufnahme im Filterrahmen zusammen wirkt, sondern auf das Filtermedium wirkt und es dadurch einklemmt. Eine solche Fixierung birgt Probleme in sich, sobald das Filtermedium einen bestimmten Grad an Kompressibilität überschreitet. Dies ist insbesondere bei Mehriagenfltem mit Kohleschichten gegeben. Werden die Kohleschichten komprimiert, ist diese Verformung zum Teil irreversibel. Dadurch würde eine Fixierung dieser Art ihre Vorspannkraft verlieren und wäre besonders im Kfz-Einsatz mit schwingender und stoßweiser Beanspruchung gefährdet, sich zu lösen.

Die US-A-5 273 563 beschreibt ein Filtersystem, bei weichem eine Klammer vorgesehen ist, die an einem Träger verrastbar angeordnet ist. Diese Klammer hält eine Endfalte des Filtermediums über eine zusätzliche Haltelasche.

Die Aufgabe der Erfindung besteht demnach darin, einen kostengünstig herstellbaren Filtereinsatz zu schaffen, wobei sich der Spalt zwischen dem Filtereinsatz und der Aufnahme im Filtergehäuse zuverlässig abdichten läßt und sich gleichzeitig eine zuverlässige Verbindung zwischen dem Rahmen des Filterelementes und dem zum Einsatz kommenden Filtermedium erzeugen läßt.

Diese Aufgabe wird durch die Merkmale des Patentanspruches 1 gelöst. Vorteilhafte Weiterbildungen sind in den abhängigen Ansprüchen 2-10 beansprucht. Ferner wird gemäß Anspruch 11 ein Filter beansprucht, welches mit dem Filtereinsatz gemäß einem der Ansprüche 1-10 ausgestattet ist.

### Vorteile der Erfindung

Der erfindungsgemäße Filter Filtereinsatz wird in eine hierfür vorgesehene Aufnahme eingesetzt, wobei Dichtmittel für eine Abdichtung zwischen Rein- und Rohseite des Filters in dem hier entstehenden Spalt sorgen. Die Dichtmittel müssen zu diesem Zweck komprimiert werden. Sie üben daher einen Druck auf den Filterrahmen des Filtereinsatzes aus. Dieser Druck entspricht einer Streckenlast auf den Filterrahmen, die dort ein Biegemoment erzeugt und somit auf das Filtermediurn übertragen wird. An den zick-zack-förmigen Seitenkanten des Filtermediums kann die Kraft ohne weiteres als Druckkraft in die Filterfalten eingeleitet werden und erzeugt auf diese Weise eine ausreichende Biegesteifigkeit der Seitenfläche des Filtereinsatzes. Die Endkanten des Filtermediums lassen sich jedoch leicht deformieren, da sie dabei der Faltrichtung des Filtermediums folgen. In diesem Bereich hat der Filterrahmen das durch die Dichtmittel erzeugte Biegemoment ohne wesentliche Unterstützung des Filtermediums zu ertragen. Daher muß der Filterrahmen im Bereich der Endkanten genügend biegesteif ausgeführt sein, um ein Klaffen der Dichtmittel und daraus folgend eine Undichtigkeit zu verhindern.

Der Filterrahmen wird im Bereich der Endkanten des Filtermediums durch einen Abschluß gebildet, der aus mindestens einem strangförmigen Profil besteht. Dieses läßt sich zur Einbringung mindestens der Endfalte des Filtermediums schließen, wodurch die Abdichtung zwischen dem Abschluß und dem Filtermedium erzeugt wird. Der Abschluß weist im geschlossenen Zustand eine genügende Biegesteifigkeit zur Erzielung des obengenannten Dichteffektes auf. Der Dichteffekt des Abschlusses sorgt nicht nur für eine Trennung von Roh- und Reinseite, sondern verhindert weiterhin, daß bei mehrlagigen Filtermedien poröse Zwischenschichten aus den geschnittenen Rändern der Endfalte rieseln. Dies ist insbesondere bei Kombinationsfiltem mit Zwischenlagen aus Aktivkohle von Vorteil. Es wird verhindert, daß Aktivkohlepartikel aus dem Filtermedium in den belüfteten Innenraum gelangen.

Es ist vorteilhaft, das strangförmige Profil als ein Extrusionsteil aus Kunststoff herzustellen. Hierdurch lassen sich komplizierte Profilformen realisieren. Die Wahl des Werkstoffes trägt weiterhin zur Wirtschaftlichkeit des Filtereinsatzes bei. Zur Bildung der Abschlüsse wird das Extrusionsteil auf die gewünschte Länge zugeschnitten. Dadurch lassen sich Filtereinsätze unterschiedlicher Größe und Kapazität mit demselben Strangpreßprofil ausstatten. Es lassen sich auf diese Weise Filterbaureihen erzeugen, die jederzeit ohne zusätzliche Werkzeugkosten erweitert werden können.

Die Profilteile können vorteilhafterweise aus mehreren Materialien bestehen. Dies läßt sich insbesondere durch Fertigung der Abschlüsse als Spritzgußteil in Mehrkomponententechnik erreichen. Es ist zum Beispiel möglich, durch gezielte Wahl eines elastischen Materials, aus dem Teile des Abschlusses gefertigt sind, eine dichtende Wirkung zum Gehäuse zu erzielen. Dies macht das nachträgliche Aufbringen z. B. von Schaumstoffdichtungen im Bereich der Abschlüsse überflüssig. Es kann ein Fertigungsschritt dabei eingespart werden, was zu einer höheren Wirtschaftlichkeit des Filtereinsatzes beiträgt. Der Einsatz von Spritzgußteilen hat im Vergleich zu Extrusionsteilen weiterhin den Vorteil, das für gestalterische Maßnahmen eine dritte Dimension entlang der Längenausdehnung des Abschlusses zur Verfügung steht. Zum Beispiel können hakenförmige Rutschsicherungen vorgesehen werden, die auf den Innenseiten des Abschlusses angebracht sind und sich auf diese Weise in das eingeklemmte Filtermedium graben.

Eine zweckmäßige Ausgestaltung des Erfindungsgedankens sieht vor, den Abschluß mit einem Filmscharnier zu versehen. Der Abschluß besteht dann aus einem Bauteil, welches sich durch Klappen von zwei Wangen um das Filmscharnier öffnen und schließen läßt. Ferner ist es möglich, zwei Filmscharniere vorzusehen, deren Abstand der Dicke des Filtermediums entspricht. Dadurch werden die einzelnen Filmscharniere nicht so stark verformt. Außerdem läßt sich auf diese Weise eine Parallelität der beiden Wangen, die das Filtermedium einklemmen, herbeiführen.

Gemäß einer weiteren Ausgestaltung der Erfindung tragen die beiden Wangen des Abschlusses nut- und federartige Mittel zur Erzeugung einer Clipsverbindung. Die Clipsverbindung rastet dann bei Montage des Filtermediums im Abschluß durch Schließen desselben ein. Dieser Prozeßschritt läßt sich durch Vorsehen eines entsprechenden Werkzeuges gut automatisieren.

Insbesondere bei dieser Bauform ist es auch denkbar, den Abschluß zweiteilig auszuführen, die Teile werden dann durch die Clipsverbindung zusammengebracht und klemmen dabei das Filtermedium ein. Das Öffnen und Schließen des Abschlusses kann dann durch eine translatorische Bewegung erfolgen, die sich prozeßtechnisch noch einfacher umsetzen läßt.

Eine Modifikation der Erfindung sieht anstelle der Clipsverbindung vor, den Abschluß durch eine Klebeverbindung mit dem Filtermedium zu schließen. Die Klebeverbindung kann auch mit der Clipsverbindung kombiniert werden, wenn besondere Anforderungen an Dichtheit und Sicherheit der Verbindung zwischen Abschluß und Filtermedium gefordert werden. Eine weitere Möglichkeit besteht in der Verschweißung der Wangen des Abschlusses, insbesondere durch das Ultraschallschweißverfahren. Hierfür müssen Energieeinleitungszonen vorgesehen werden, durch deren Anschmelzen eine Verbindung zwischen den Wangen des Abschlusses erfolgt. Selbstverständlich kann auch diese Art der Verbindung mit den vorgenannten kombiniert werden.

Es ist vorteilhaft, an den Innenseiten der Wangen, die mit dem Filtermedium in Kontakt stehen, Rutschsicherungen anzubringen. Diese können als Absätze im Profil ausgebildet sein, so daß diese das Filtermedium im geschlossenen Zustand des Abschlusses verformen. Dadurch wird ein Herausrutschen des Filtermediums aus dem Abschluß verhindert. Durch die Verformung des Filtermediums wird gleichzeitig eine verbesserte Dichtung zwischen Filterrahmen und Filtermedium erzeugt.

Gemäß einer günstigen Ausführungsform werden die Abschlüsse auf dieselbe Länge wie die Falten des Filtermediums gebracht. Sie schließen dann mit diesem ab und können problemlos mit den Seitenteilen des Rahmens verbunden werden. Diese können z. B. aus Papier bestehen, welches mit den zick-zack-förmigen Seitenkanten des Filtermediums und mit den Stirnseiten des Abschlusses verklebt werden. Eine andere Variante der Erfindung sieht vor, den Abschluß etwas kürzer als die Filterfalten auszuführen. Dies bringt Vorteile bei der Herstellung der Filtereinsätze, da Montagetoleranzen bei der Verbindung zwischen Abschluß und Filtermedium ausgeglichen werden können. Eine Verbindung der Seitenteile des Rahmens mit dem Abschluß kann z. B. durch Umknicken von die Seitenteile bildenden Pappstreifen geschehen.

Es ist vorteilhaft, die Dichtmittel zur Abdichtung des Dichtspaltes zwischen Aufnahme im Filtergehäuse und Filterrahmen als Schaumstoffstreifen auszuführen, die auf die Außenseite des Filterrahmens aufgeklebt sind. Dies läßt sich einfach bei der Herstellung der Filtereinsätze bewerkstelligen. Die Dichtung wird dann beim Wechsel des Filtereinsatzes mit ausgewechselt, so daß eine Undichtheit infolge Alterung der Dichtung vermieden werden kann.

Diese und weitere Merkmale von bevorzugten Weiterbildungen der Erfindung gehen außer aus den Ansprüchen auch aus der Beschreibung und den Zeichnungen hervor.

### Zeichnungen

Weitere Einzelheiten der Erfindung werden in den Zeichnungen anhand von schematischen Ausführungsbeispielen beschrieben. Hierbei zeigen
- Figur 1: einen Längsschnitt durch ein Filtergehäuse mit eingebautem Filterelement, wobei der Längsschnitt auch durch die Abschlüsse an den Endkanten des Filtermediums verläuft,
- Figur 2: das Detail X aus Figur 1,
- Figur 3: das Profil eines Abschlusses mit Filmscharnier und Clipsverbindung in geöffnetem Zustand,
- Figur 4: eine zweiteilige Ausführung des Abschlusses mit Energieeinleitungszonen für eine Verschweißung, wobei die translatorische Fügerichtung durch Pfeile angedeutet ist.

### Beschreibung der Ausführungsbeispiele

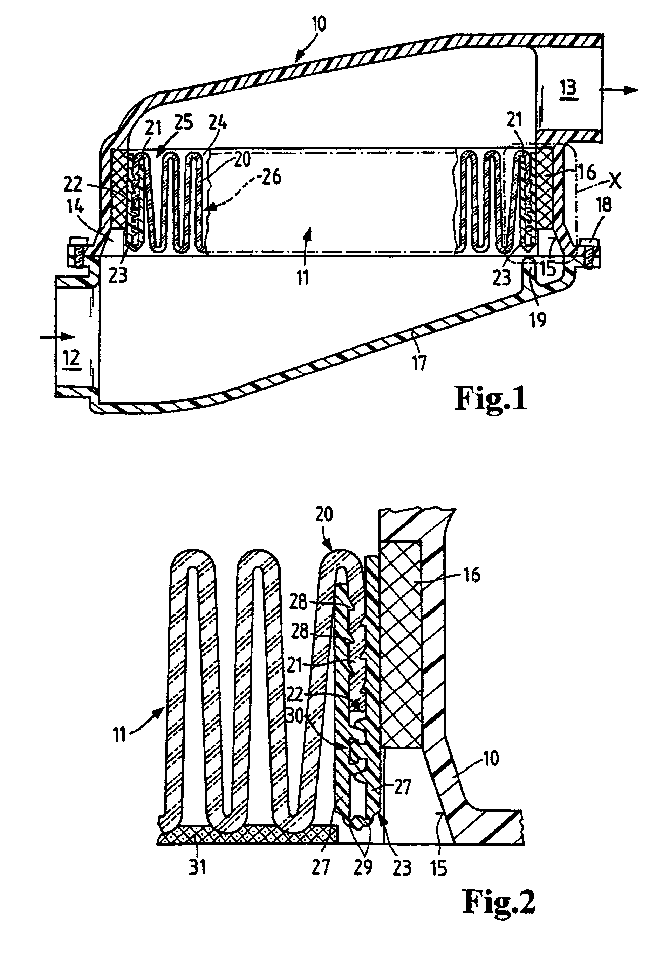

In Figur 1 ist ein Filter, bestehend aus einem Gehäuse 10 und einem Filtereinsatz 11 dargestellt. Das Filtergehäuse weist einen Einlaß 12 und einen Auslaß 13 sowie eine Aufnahme 14 für den Filtereinsatz 11 auf. Die Aufnahme hat eine Einsetzschräge 15, die die Montage des Filtereinsatzes erleichtert. Dichtmittel 16, die z. B. aus Schaumstoff oder Moosgummi bestehen können und am Filtereinsatz angebracht sind, dichten die Roh- und Reinseite voneinander ab. Die Einbauöffnung 14 wird durch Entfernen des Deckels 17 vom Gehäuse freigegeben. Nach Einsetzen des Filtereinsatzes wird der Deckel mit Hilfe von Verbindungsmitteln 18, z. B. Schrauben, auf dem Gehäuse 10 fixiert. Im Deckel können Sicherungen 19 vorhanden sein, die ein Herausrutschen des Filtereinsatzes aus der Aufnahme vermeiden.

Der Filtereinsatz 11 besteht aus einem gefalteten Filtermedium 20, wobei Falten 21, die an Endkanten 22 anschließen, in einen Abschluß 23 eingebracht sind (siehe auch Figur 2). Der Abschluß bildet zusammen mit Seitenteilen 24 einen Filterrahmen 25. Die Seitenteile 24 sind auf die zick-zack-förmige Seitenkante 26 des Filtermediums 20 aufgeklebt. Auf die gleiche Weise erfolgt die Verbindung mit dem Abschluß 23 mit den Seitenteilen 24 zum Filterrahmen 25, da der Abschluß genau so lang ist, wie die Endkante 22 des Filtermediums 20.

Anhand von Figur 2 kann die Wirkungsweise des Abschlusses 23 genauer erläutert werden. Dieser besteht aus zwei Wangen 27, die mit Hilfe von Rutschsicherungen 28 das Filtermedium 20 einklemmen. Der Abschluß ist als Strangpreßprofil mit zwei Filmscharnieren 29 ausgeführt. Der Abstand der Filmscharniere 29 voneinander entspricht dem gewünschten Abstand der Innenseiten der Wangen 27. Der Verschluß des Abschlusses 23 erfolgt durch eine Clipsverbindung 30. Auf der Rohseite des Filtereinsatzes 11 ist ein Vorabscheidevlies 31 angebracht.

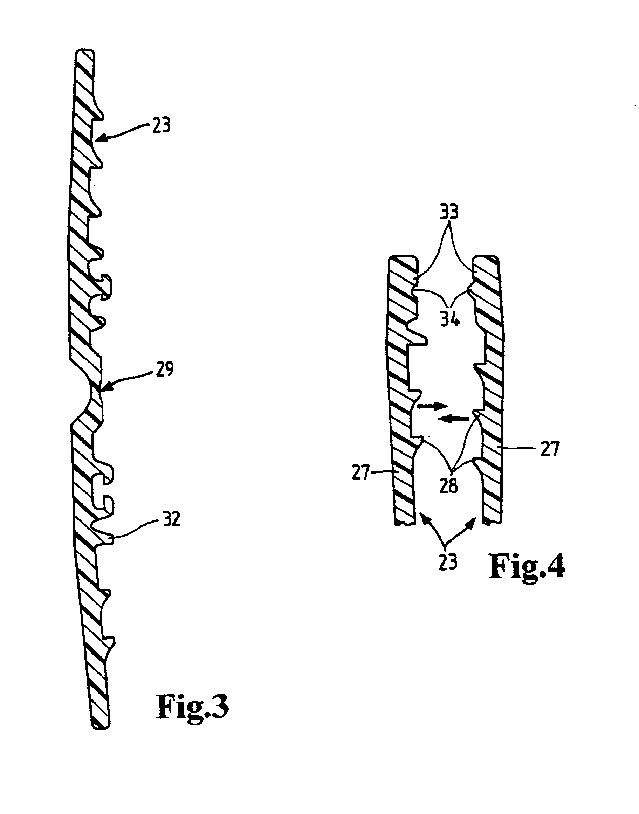

Figur 3 zeigt das Profil des Abschlusses 23 im geöffneten Zustand, wie es als Halbzeug vorliegt. Diese Version des Abschlusses hat nur ein Filmschamier 29 und ist ebenfalls mit einer Clipsverbindung ausgestattet. Weiterhin ist ein Anschlag 32 für die nicht dargestellte Endkante 22 des Filtermediums vorgesehen.

Figur 4 zeigt den Profilschnitt durch eine zweiteilige Ausführung des Abschlusses 23, wobei jede Wange 27 durch eines der Teile gebildet wird. Die Wangen 27 sind mit Energieeinleitungszonen 33 für eine Ultraschallverschweißung versehen. Die Energieeinleitungszonen weisen weiterhin eine Fügehilfe 34 auf, die eine exakte Positionierung der beiden Teile zueinander erlaubt. Das nicht dargestellte Filtermedium wird durch eine translatorische Fügebewegung zwischen den Rutschsicherungen 28 der Wangen eingeklemmt. Die Fügerichtung ist durch Pfeile angedeutet.

## Patentansprüche

1. Filtereinsatz (11) mit einem rechteckigen Filterrahmen (25), welcher dichtend an die Seitenkanten (26) und die Endkanten (22) eines gefalteten Filtermediums anschließt, wobei mindestens eine Falte (21) an mindestens einer der beiden Endkanten (22) des Filtermediums in einen Abschluß (23), der einen Teil des Filterrahmens (25) bildet, eingebracht ist, **dadurch gekennzeichnet, daß** der Abschluß (23) aus zwei Teilen besteht, in die die Endfalte eingeklemmt ist und die zwei Teile miteinander verbunden sind, wobei der Abschluss zusammen mit den Seitenteilen (24) einen Filterrahmen (25) bildet und die Seitenteile (24) auf die zickzackförmige Seitenkante (26) des Filtermediums (20) aufgeklebt sind und auf gleiche Weise die Verbindung mit dem Abschluss (23) mit den Seitenteilen (24) zum Filterrahmen (25) erfolgt.

2. Filtereinsatz nach Anspruch 1, **dadurch gekennzeichnet, daß** der Abschluß (23) aus mindestens einem zumindest im wesentlichen strangförmigen Profil besteht.

3. Filtereinsatz nach Anspruch 2, **dadurch gekennzeichnet, daß** das strangförmige Profil ein Extrusionsteil aus Kunststoff ist.

4. Filtereinsatz nach Anspruch 1, **dadurch gekennzeichnet, daß** der Abschluß aus verschiedenen Materialien besteht, wobei insbesondere ein Material des Abschlusses elastisch ist und in einem Bereich vorgesehen ist, in dem sich der Abschluß in dem Gehäuse abstützt.

5. Filtereinsatz nach einem der vorherigen Ansprüche, **dadurch gekennzeichnet, daß** der Abschluß (23) durch eine Clipsverbindung (30) verschlossen ist.

6. Filtereinsatz nach einem der vorherigen Ansprüche, **dadurch gekennzeichnet, daß** der Abschluß (23) durch eine Klebeverbindung mit dem Filtermedium (20) verbunden ist.

7. Filtereinsatz nach einem der vorherigen Ansprüche, **dadurch gekennzeichnet, daß** der Abschluß (23) Energieeinleitungszonen (33) für dessen Verschweißung im geschlossenen Zustand aufweist.

8. Filtereinsatz nach einem der vorherigen Ansprüche, **dadurch gekennzeichnet, daß** die Kontaktfläche des Abschlusses (23) zum Filtermedium (20) mindestens eine Rutschsicherung (28) aufweist, die dieses im geschlossenen Zustand des Abschlusses verformt.

9. Filtereinsatz nach einem der vorherigen Ansprüche, **dadurch gekennzeichnet, daß** der Abschluß (23) eine geringere Länge als die Endkante (22) des Filtermediums (20) besitzt.

10. Filtereinsatz nach einem der vorherigen Ansprüche, **dadurch gekennzeichnet, daß** die Dichtmittel (16) aus einem Dichtprofil, insbesondere aus einem Schaumstoffstreifen, welcher am Filterrahmen (25) angebracht ist, bestehen.

11. Filter, insbesondere Luftfilter für den Einsatz in Kfz-Klimaanlagen, umfassend ein öffenbares Filtergehäuse mit einem Einlass (12) und einem Auslass (13) sowie einen rechteckigen Filtereinsatz (11) mit den Merkmalen gemäß einem der Ansprüche 1 bis 10.

## Claims

1. Filter element (11), having a rectangular filter frame (25), which communicates sealingly with the lateral edges (26) and the end edges (22) of a folded filter medium, at least one fold (21) being introduced into a termination (23), which forms part of the filter frame (25), at at least one of the two end edges (22) of the filter medium, **characterised in that** the termination (23) comprises two parts, into which the end fold is clamped in position, and the two parts are interconnected, the termination together with the lateral parts (24) forming a filter frame (25), and the lateral parts (24) being adhered to the zigzag-shaped lateral edge (26) of the filter medium (20), and the termination (23) being connected to the lateral parts (24) to form the filter frame (25) in the same manner.

2. Filter element according to claim 1, **characterised in that** the termination (23) comprises at least one profile which is at least substantially in the form of an extruded body.

3. Filter element according to claim 2, **characterised in that** the profile, which is in the form of an extruded body, is an extruded part formed from plastics material.

4. Filter element according to claim 1, **characterised in that** the termination is formed from various materials, more especially one material of the termination being resilient and provided in a region in which the termination is supported in the housing.

5. Filter element according to one of the previous claims, **characterised in that** the termination (23) is closed by a clip-in connection (30).

6. Filter element according to one of the previous claims, **characterised in that** the termination (23) is connected to the filter medium (20) by an adhesive connection.

7. Filter element according to one of the previous claims, **characterised in that** the termination (23) has energy triggering zones (33) for welding said termination in the closed position.

8. Filter element according to one of the previous claims, **characterised in that** the face of the termination (23) in contact with the filter medium (20) has at least one slide preventing means (28) which deforms said medium when the termination is in its closed position.

9. Filter element according to one of the previous claims, **characterised in that** the termination (23) has a shorter length than the end edge (22) of the filter medium (20).

10. Filter element according to one of the previous claims, **characterised in that** the sealing means (16) comprise a sealing profile, more especially a strip of expanded plastic foam material which is mounted on the filter frame (25).

11. Filter, more especially an air filter for use in automotive vehicle air-conditioning systems, including an openable filter housing with an inlet (12) and an outlet (13) as well as including a rectangular filter element (11) having the features according to one of claims 1 to 10.

## Revendications

1. Cartouche filtrante (11) comportant un cadre rectangulaire de filtre (25) raccordé de manière étanche aux bords latéraux (26) et aux bords d'extrémité (22) d'un média filtrant plié, au moins un pli (21) situé à au moins un des deux bords d'extrémité (25) étant introduit dans une fermeture (23) constituant une partie du cadre de filtre (23),
**caractérisé en ce que**
la fermeture (23) est constituée de deux parties entre lesquelles est serré le pli d'extrémité et qui sont reliées entre elles de sorte que la fermeture forme avec les parties latérales (24) un cadre de filtre (25), les parties latérales étant collées sur les arêtes latérales (26) du média filtrant (20) plié en accordéon, et la liaison de la fermeture (23) avec les parties latérales (24), étant réalisée de la même manière pour former le cadre de filtre (25).

2. Cartouche filtrante selon la revendication 1,
**caractérisée en ce que**
la fermeture (23) est constituée d'au moins un profilé au moins en grande partie étiré.

3. Cartouche filtrante selon la revendication 2,
**caractérisée en ce que**
le profilé étiré est une pièce extrudée en matière plastique.

4. Cartouche filtrante selon la revendication 1,
**caractérisée en ce que**
la fermeture est constituée de matériaux différents, avec notamment un matériau élastique prévu dans une zone où la fermeture s'appuie sur le boîtier.

5. Cartouche filtrante selon les revendications précédentes,
**caractérisée en ce que**
la fermeture (23) est fermée par une liaison à clips (30).

6. Cartouche filtrante selon les revendications précédentes,
**caractérisée en ce que**
la fermeture (23) est reliée par collage au média filtrant (20).

7. Cartouche filtrante selon les revendications précédentes,
**caractérisée en ce que**
la fermeture (23) présente des zones d'introduction d'énergie (33) pour produire leur soudure à l'état fermé.

8. Cartouche filtrante selon les revendications précédentes,
**caractérisée en ce que**
la portée de contact de la fermeture (23) sur le media filtrant (20) présente au moins une sécurité contre le glissement (28), ayant pour effet, en l'état de fermeture, de déformer le média.

9. Cartouche filtrante selon les revendications précédentes,
**caractérisée en ce que**
la fermeture (23) est moins longue que le bord d'extrémité (22) du media filtrant (20).

10. Cartouche filtrante selon les revendications précédentes,
**caractérisée en ce que**
le moyen d'étanchéité (16) est constitué par un profilé, notamment, une bande de mousse, placée sur le cadre de filtre (25).

11. Filtre, en particulier filtre à air pour utilisation dans des installations de climatisations de véhicules automobiles comprenant un boîtier de filtre ouvert, avec une entrée (12) et une sortie (13), ainsi qu'une cartouche filtrante (11) présentant les caractéristiques d'une des revendications 1 à 10.
